Europäisches Patentamt

European Patent Office

Office européen des brevets

(11) Publication number: **0 459 072 A1**

# EUROPEAN PATENT APPLICATION

(21) Application number: **90830251.6**

(22) Date of filing: **01.06.90**

(51) Int. Cl.⁵: **H01M 12/06**

(43) Date of publication of application:
**04.12.91 Bulletin 91/49**

(84) Designated Contracting States:
**DE FR GB IT**

(71) Applicant: **TANAKA KIKINZOKU KOGYO K.K.**
**6-6, Kayaba-CHO 2-chome, Nihonbashi**
**Chuo-ku Tokyo 103(JP)**

Applicant: **Furuya, Nagakazu**
**4-3-31, Ohte 2-chome**
**Kofu-shi Yamanashi(JP)**

(72) Inventor: **Furuya, Nagakazu**
**No. 4-3-31 Ohte 2-chome**
**Kofu-shi, Yamanashi(JP)**

(74) Representative: **Pellegri, Alberto et al**
**c/o Società Italiana Brevetti S.p.A. Via**
**Cavour, 9**
**I-21100 Varese(IT)**

(54) **Aluminum-chlorine cell.**

(57) An aluminum-chlorine cell, in which an electrolytic bath contains an electrolytic solution (2) therein, and a cathode and an anode are arranged in the electrolytic bath, and in which the anode (3) is composed of one of aluminum and aluminum alloys, and the the cathode (4) is composed of a gas diffusion electrode.

FIG. 1

## BACKGROUND OF THE INVENTION

### Field of the Invention

The present invention relates to an aluminum-chlorine cell having a high output voltage and a large current for use in storing electric power and various fields.

### Description of the Background Art

Conventionally, a zinc-chlorine cell as a cell utilizing a halogen gas has been developed. However, in this case, an output voltage is low such as 1.5 to 1.6 V. Hence, a cell utilizing a halogen gas having a high output voltage has been demanded.

## SUMMARY OF THE INVENTION

Accordingly, it is an object of the present invention to provide an aluminum-chlorine cell in view of the prior art, which is capable of outputting a high voltage and a large current.

In accordance with one aspect of the present invention, there is provided an aluminum-chlorine cell, comprising an electrolytic bath for containing an electrolytic solution therein, a cathode arranged in the electrolytic bath and composed of one of aluminum and aluminum alloys, and an anode arranged in the electrolytic bath at a certain distance away from the cathode and composed of a gas diffusion electrode.

## BRIEF DESCRIPTION OF THE DRAWING

The above and other objects, features and advantages of the present invention will more fully appear from the following description of the preferred embodiment with reference to the accompanying drawings, in which:

Fig. 1 is a schematic cross sectional view of one embodiment of an aluminum-chlorine cell according to the present invention; and

Fig. 2 is a fragmentary cross sectional view of a gas diffusion electrode used in the cell shown in Fig. 1.

## DESCRIPTION OF THE PREFERRED EMBODIMENT

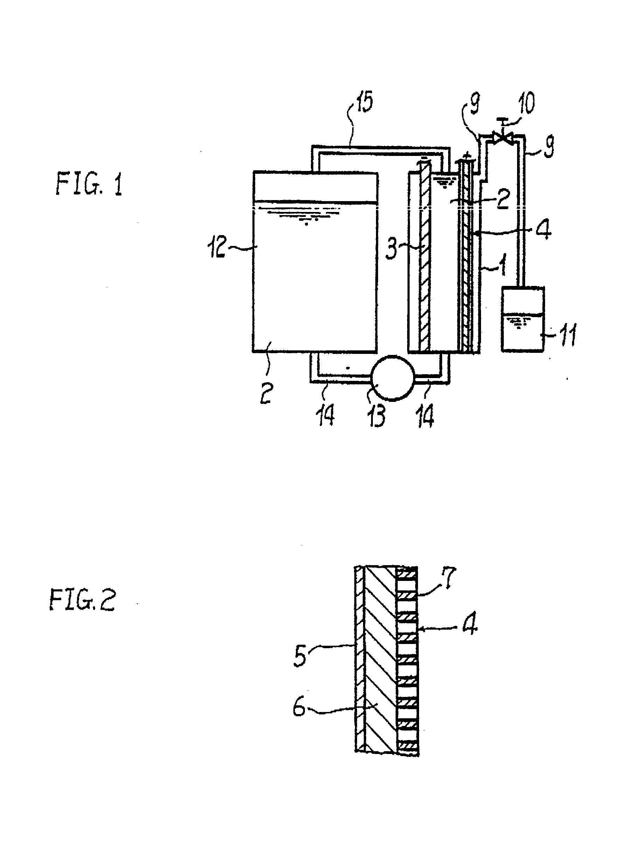

Referring now to the drawings, wherein like reference characters designate like or corresponding components throughout the several views and thus the repeated description can be omitted for the brevity, there is shown in Figs. 1 and 2 one embodiment of an aluminum-chlorine cell according to the present invention.

In the drawings, an electrolytic solution 2 including hydrogen chloride (HCl) and sodium chloride (NaCl) therein is contained in an electrolytic bath 1, and an aluminum plate 3 as a cathode and a gas diffusion electrode 4 as an anode are arranged at a certain distance away from each other in the bath 1. As shown in Fig. 2, the gas diffusion electrode 4 has a laminate form including a reaction layer 5, a gas diffusion layer 6 joined together with the reaction layer 5, and a porous collector plate 7 attached to the gas diffusion layer 6.

In this embodiment, the reaction layer 5 is prepared as follows: That is, PdO powder having an average particle size of approximately 150Å, hydrophobic carbon black powder having an average particle size of approximately 420Å and polytetrafluoroethylene (PTFE) powder having an average particle size of approximately $0.3\mu$ are mixed at a ratio of 1:10:3.5, and then the obtained mixture is processed under pressure into a film form having a dimension of, for instance, 0.1mm in thickness x 100mm in width x 100mm in length. The gas diffusion layer 6 is prepared as follows: That is, hydrophobic carbon black powder having an average particle size of approximately 450Å and the PTFE powder having the average particle size of approximately $0.3\mu$ are mixed at a ratio of 7:3, and than the obtained mixture is processed under pressure into a film form having a thickness of approximately 0.5 mm.

In the diffusion electrode 4, the reaction layer 5 contacts the electrolytic solution 2, and the porous collector plate 7 is connected to a gas storage tank 11 through a pipe 9 having a valve 10 in its intermediate portion for carrying out an open-close control of the pipe 9. A tank 12 for storing and circulating the electrolytic solution 2 to the bath 1 is also provided. The bottoms of the bath 1 and the tank 12 are connected with each other through a pipe 14 and a pump 13 arranged in the middle of the pipe 14, and the tops of the bath 1 and the tank 12 are also linked with each other via another pipe 15.

In the halogen cell described above, during a discharge operation, chlorine gas stored in the tank 11 is supplied into the electrolytic solution 2 in the form of $Cl^-$ through the pipe 9 and the gas diffusion electrode 4 where $Cl_2$ is changed into $2Cl^-$ by the electrode reaction, and, at the same time, the aluminum of the cathode 3 is changed into $Al^{3+}$ to be eluted into the electrolytic solution 2. Hence, in the electrolytic solution 2, $AlCl_3$ is formed to increase its concentration, and an output voltage of 2V is obtained during the discharge. A lot of chlorine gas $Cl_2$ is changed into $2Cl^-$ in the reaction layer 5 of the gas diffusion electrode 4, and the obtained $2Cl^-$ are eluted into the electrolytic solution 2 permeated in the react ion layer 5, thereby obtaining an extremely large discharge amount such as 5 times as compared with a conventional zinc-chlorine cell,

In this embodiment, although the PdO is used as a catalyst in the reaction layer 5 of the gas diffusion electrode 4, however, other metals in the platinum group, oxides thereof or the both thereof can be used as the catalyst.

As to the cathode, aluminum or an aluminum alloy including lead (Pb), thallium (Tl) or the like can be used, and a conductive insoluble material covered by aluminum or an aluminum alloy may be also used.

Relating to the electrolytic solution including HCl and NaCl, a trace amount of additive such as indium (In), cadmium (Cd), mercury (Hg) or the like can be included.

As described above, in an aluminum-chlorine cell according to the present invention, a high output voltage can be obtained, and chlorine gas can be quickly supplied to the entire surface of a reaction layer from a gas diffusion layer of a gas diffusion electrode as an anode during a discharge operation. Hence, a flowing current per unit area of the anode is large, and a large current can be picked up, thereby enabling a remarkably powerful performance.

Although the present invention has been described in its preferred embodiment with reference to the accompanying drawings, it it readily understood that the present invention is not restricted to the preferred embodiment and that various changes and modifications can be made by those skilled in the art without departing from the spirit and scope of the present invention.

## Claims

1. An aluminum-chlorine cell, comprising:
   an electrolytic bath for containing an electrolytic solution therein;
   a cathode arranged in the electrolytic bath and composed of one of aluminum and aluminum alloys; and
   an anode arranged in the electrolytic bath at a certain distance away from the cathode and composed of a gas diffusion electrode.

2. The cell of claim 1, wherein the gas diffusion electrode includes a reaction layer composed of a catalyst, carbon black and polytetrafluoroethylene, and a gas diffusion layer bonded to the reaction layer and composed of the carbon black and the polytetrafluoroethylene, the reaction layer contacting the electrolytic solution.

3. The cell of claim 2, wherein chlorine gas is supplied to the gas diffusion layer of the gas diffusion electrode during a discharge.

4. The cell of claim 2, wherein the catalyst is composed of one of metals in a platinum group and oxides thereof.

5. The cell of claim 2, wherein the aluminum alloy includes one of lead and thallium.

6. The cell of claim 1, wherein the electrolytic solution includes a trace amount of additive composed of one of indium, cadmium and mercury.

7. The cell of claim 2, also including a tank for supplying chlorine gas to the gas diffusion layer of the gas diffusion electrode.

8. The cell of claim 1, wherein the electrolytic solution includes hydrogen chloride and sodium chloride therein.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JOURNAL OF APPLIED ELECTROCHEMISTRY, vol. 19, 1989, pages 147-151, Chapman and Hall Ltd; J.-F. EQUEY et al.: "Al/Cl2 battery with slightly acidic NaCl electrolyte. II. Ti-Ti/Ru oxide chlorine cathodes" * Page 147, abstract; paragraph: "Experimental details" * | 1,6,8 | H 01 M 12/06 |
| Y | IDEM | 2-5 | |
| Y | US-A-4 748 095 (NAGAKAZU FURUYA et al.) * Abstract; column 3, line 22 - column 4, line 28 * | 2-4 | |
| X | LU-A-6 522 4 (TEXTRON, INC.) * Page 3, line 12 - page 5, line 14; page 9, line 33 - page 10, line 16; claims * | 1,6-8 | |
| Y | | 5 | |
| X | US-A-3 840 407 (N.-P. YAO) * Abstract; column 1, line 63 - column 9, line 10 * | 1-3 | |
| E | CHEMICAL ABSTRACTS, vol. 113, 1990, page 211, abstract no. 155895w, Columbus, Ohio, US; & JP-A-02 152 171 (TANAKA NOBLE METAL INDUSTRIAL CO., LTD) 12-06-1990 * Whole abstract * | 1-4,8 | TECHNICAL FIELDS SEARCHED (Int. Cl.5) <br><br> H 01 M 12/06 |
| A | EP-A-0 051 439 (DIAMOND SHAMROCK CORP.) * Abstract; page 25, example 11 * | 2-4 | |
| A | US-A-2 572 296 (H.M. ZIMMERMAN) * Column 1, line 42 - column 5, line 64 * | 1 | |

The present search report has been drawn up for all claims

| Place of search | Date of completion of search | Examiner |
|---|---|---|
| The Hague | 22 January 91 | DE VOS L.A.R. |